Europäisches Patentamt

European Patent Office

Office européen des brevets

(11) Veröffentlichungsnummer: **0 270 130**
**A2**

## (12) EUROPÄISCHE PATENTANMELDUNG

(21) Anmeldenummer: 87117988.3

(22) Anmeldetag: 04.12.87

(51) Int. Cl.⁴: **F04B 13/00**

(30) Priorität: 05.12.86 DE 3641652

(43) Veröffentlichungstag der Anmeldung:
08.06.88 Patentblatt 88/23

(84) Benannte Vertragsstaaten:
CH DE FR GB LI NL SE

(71) Anmelder: **Saphirwerk Industrieprodukte AG**
**Erlenstrasse 36**
**CH-2555 Brügg(CH)**

(72) Erfinder: **Funke, Herbert, Dr.**
**Ludwig-von-Nagelstrasse 12**
**D-8033 Krailling/München(DE)**

(74) Vertreter: **Schmidt-Evers, Jürgen, Dipl.-Ing. et**
**al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer Postfach**
**26 01 32**
**D-8000 München 26(DE)**

(54) **Feindosierpumpe für Flüssigkeiten.**

(57) Einstückige Pumpenkopfeinheit (1) mit geschlossenem Jochkörper (2) und angearbeitetem Befestigungsflansch (3). Jochkör per mit zentraler Bundbohrung zur Aufnahme der fremdspülbaren Keramik-Kolbenführungshülse (4) sowie der den Verdrängerraum bildenden Pumpenkopfbüchse (6) aus Saphir und mit seitlichen Sichtschlitzen (13) zur Schaffung visueller Zugänglichkeit zu den besagten Teilen. Aufnahme der zugehörigen Ventilmodule (11, 12) mit sicht-und einsehbaren Kugelventilpatronen (36, 37) in randständiger Anordnung in vertikalen Aussparungen (14), die von den Längssichtschlitzen abgehen. Ventilmodule in Sonderausführung mit eingebauter Entlüftungsvorrichtung (15). Ausführung sämtlicher mediumbrührter Teile aus Saphir und Keramik sowie Sonderwerkstoffen auf Kunststoffbasis. Hierbei Stützfeder für die Kolbendichtung (7) mit Hülle aus verstärktem PTFE in Reinsttitan, oder in Alternativauslegung, mit O-Ring aus speziellem Fluorelastomer.

FIG.1A

## Feindosierpumpe für Flüssigkeiten

Die Erfindung betrifft eine Feindosierpumpe für Flüssigkeiten, insbesondere zur Anwendung in der HPLC-Technik, mit einem Pumpenkopfgehäuse, mit mindestens einer darin angeordneten, einen Verdrängerraum sowie Zu-und Ableitungskanäle enthaltenden Pumpenkopfbüchse aus durchsichtigem Material, mit einem Tauchkolben für jeden Verdrängerraum und mit in dem Pumpenkopfgehäuse angeordneten patronenartigen Ventileinheiten aus durchsichtigem Material, von denen jede mit ihrem einen Ende an den Mündungsbereich des (eines) Zuleitungskanales bzw. Ableitungskanales an der (den) Pumpenkopfbüchse(n) und mit einem anderen Ende an einen Anschlußrohradapter anliegt, welcher einen abgewinkelten Leitungskanal enthält, der an seinem einen Ende mit der Ventileinheit und an seinem anderen Ende mit einem Anschlußrohr für die zu fördernde Flüssigkeit verbunden ist, wobei auf den Anschlußrohradapter ein Dichtungsdruck ausgeübt wird, mittels welchem eine dichte Verbindung der Ventileinheit mit der Pumpenkopfbüchse einerseits und dem Anschlußrohradapter andererseits gewährleistet ist, und wobei das Pumpenkopfgehäuse mit Ausnehmungen versehen ist, durch welche die Pumpenkopfbüchse und die Ventileinheiten von außen sichtbar sind.

Eine derartige Feindosierpumpe ist in der älteren, jedoch nicht vorveröffentlichten deutschen Patentanmeldung P 36 00 342.5 der Anmelderin beschrieben. Bei diesem älteren Vorschlag sind im Pumpenkopfgehäuse zur Aufnahme der patronenartigen Ventileinheiten Aufnahmebohrungen vorgesehen. Zur Ausübung des Dichtungsdruckes auf den Anschlußrohradapter ist jeweils ein separates Halterungselement vorgesehen, welches am Pumpenkopfgehäuse verankerbar ist. Der Dichtungsdruck wird mit einer Fixierschraube ausgeübt, die entweder das separate Halterungselement gegen das Pumpenkopfgehäuse preßt oder auf den Anschlußrohradapter drückt und damit das separate Halterungselement an dem Pumpenkopfgehäuse verkeilt.

Der Erfindung liegt die Aufgabe zugrunde, die vorstehend beschriebene Feindosierpumpe dahingehend zu verbessern, daß sie aus weniger Teilen besteht und einfacher montierbar ist.

Die Aufgabe ist erfindungsgemäß dadurch gelöst, daß zumindest der die Ausnehmungen enthaltenden Teil des Pumpenkopfgehäuses einstückig ausgebildet und die Ausnehmungen zum Sichtbarmachen der Ventileinheiten so gestaltet und angeordnet sind, daß die Ventileinheiten und die Anschlußadapter über diese Ausnehmungen montierbar oder auswechselbar sind.

Einzelheiten und Weiterbildungen dieses grundsätzlichen Erfindungsgedankens sind nachfolgend beschrieben. Die Erfindung weist noch eine Reihe weiterer Erfindungsaspekte auf, die ebenfalls nachfolgend in Zusammenhang mit den Fig. 1 bis 3 beschrieben sind. Es zeigen:

Fig. 1A eine Seitenansicht und

Fig. 1B eine Vorderansicht der Pumpenkopfeinheit mit einsehbarer Verdrängerraumhülse (6) aus Saphir mit geschlossenem Jochkörper (2) sowie Ventilmodulen (11, 12) in Verbindung mit durchsichtigen Kugelventilpatronen (36, 37) und als Sonderausführung, in Einheit mit integrierter Ablaß- und Entlüftungsvorrichtung (15);

Fig. 2A eine teilweise geschnittene Seitenansicht und

Fig. 2B eine teilweise geschnittene Vorderansicht der Pumpenkopfeinheit mit einsehbarer Verdrängerraumhülse (6) aus Saphir mit geschlossenem Jochkörper (2) sowie Ventilmodulen (11, 12) in Verbindung mit durchsichtigen Kugelventilpatronen (36, 37) und als Sonderausführung, in Einheit mit integrierter Ablaß-und Entlüftungsvorrichtung (15),

Fig. 2C eine perspektivische Darstellung der Ventilpatrone (36, 37),

Fig. 2D eine Explosionsdarstellung der Verdrängerraumeinsatzteile,

Fig. 2E eine perspektivische Darstellung des Fittinganschlusses für das Kapillarrohr;

Fig. 3A eine im Ventilmodul integrierte Ablaß-und Entlüftungsvorrichtung (15) und

Fig. 3B eine Zusammenstellungszeichnung im Ventilmodul integrierten Ablaß-und Entlüftungsvorrichtung in Einbaukonfiguration/Frontansicht.

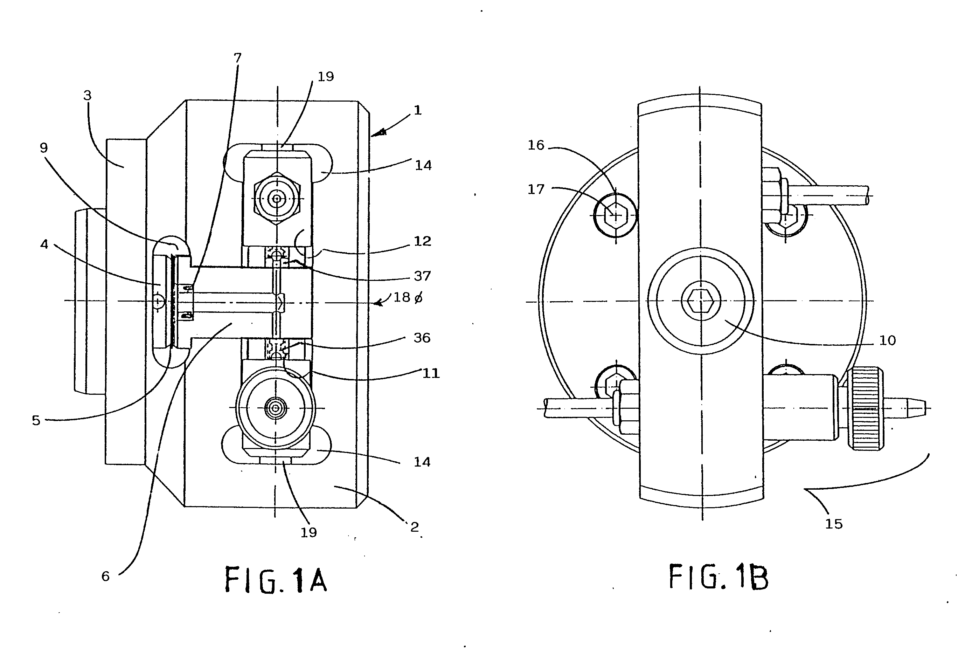

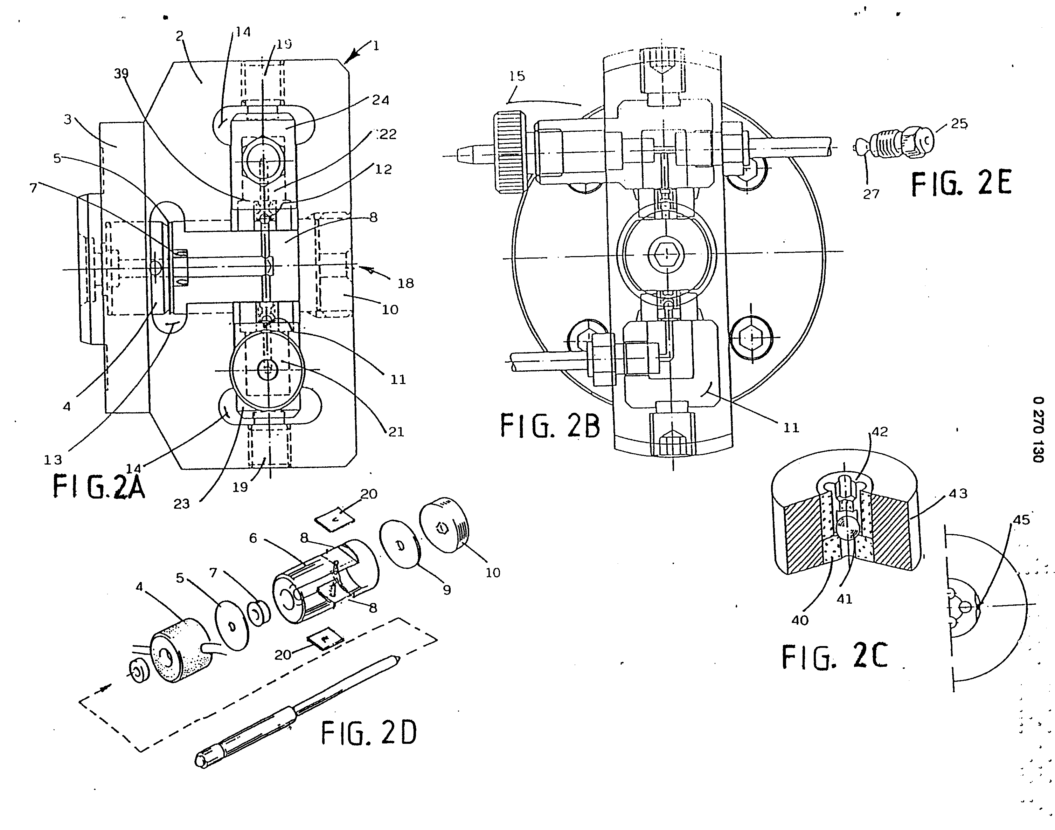

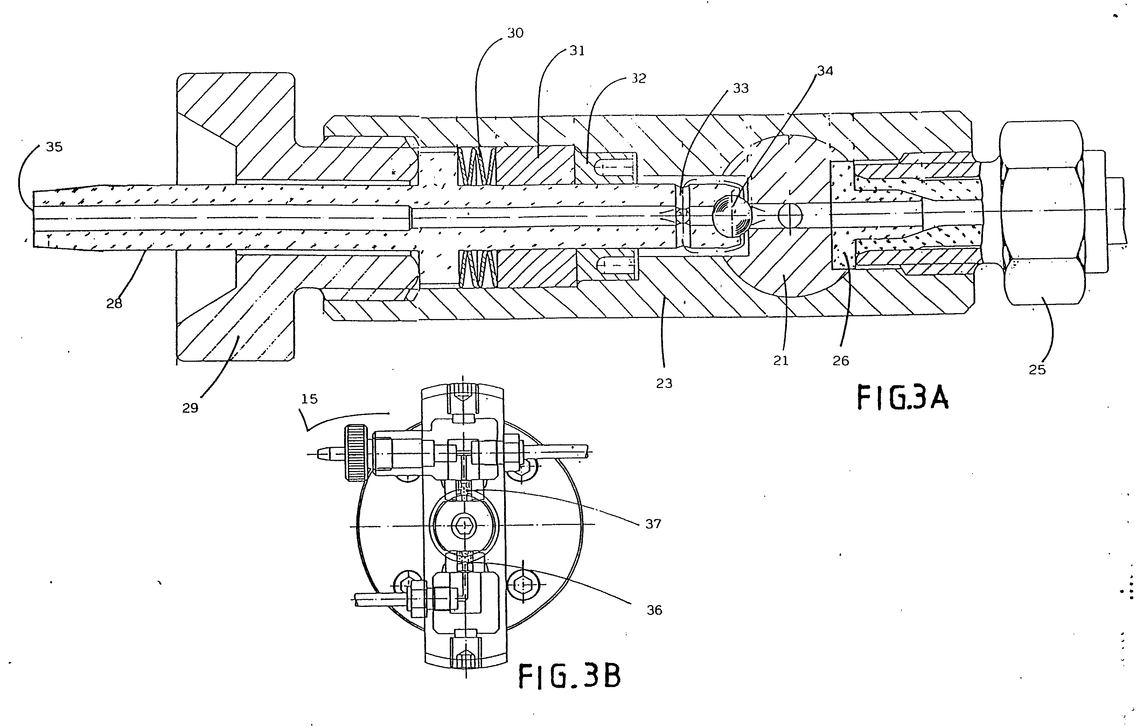

Eine in Fig. 1, 2, 3 gezeigte Auslegungsform der Erfindung beruht auf einer Kombination des jochförmigen Pumpenkopfes mit dem zugehörigen Montageschild (3). Die einstückige Bauweise ist so gewählt, daß gesonderte Halteelemente für die Ventileinheiten, die für sich eine Art Module (11, 12) bilden, entfallen. Der am Jochkörper (2) angearbeitete Befestigungs(Montage)-flansch (3) ist mit angesenkten Bohrungen (16) für die Schrauben (17) versehen, die die Verbindung zur (nicht gezeigten) Antriebseinheit der Pumpe schaffen.

Den eigentlichen Pumpenkopf bildet ein - schmaler, sehr hoher Jochkörper (2), der zur Aufnahme der (durchsichtigen) Pumpenkopfbüchse (6) und der Keramik-Kolbenführungshülse (4) eine zentrale, von vorne her zugängliche Bundbohrung (18) aufweist. Um diese Teile visuell zugänglich zu machen, ist der Jochkörper (2) mit entsprechenden seitlichen Längsschlitzen (13) versehen. Diese Schlitze laufen an ihren rückwärtigen Enden T-förmig aus, damit die Anschlußspülschläuche an der Kolbenführungshülse (4) in bevorzugter Schräglage ausgerichtet werden können. Die Längsschlitze im Pumpenkopfjoch lassen die Wandung der Aufnahmebohrung (18) in deren Mündungsbereich unberührt und laterale Stege - schließen hier den ansonsten seitlich offenen Jochkörper (2). An der beschriebenen Stelle ist ein Gewinde für eine Ringschraube (10) mit zentraler Sechskantbohrung eingeschnitten. Die Ringschraube dient zum Festsetzen der Keramik-Kolbenführungshülse (4) und der Pumpenkopfbüchse (6). Ein zwischen diesen beiden Teilen angeordneter Flachdichtungsring (5) aus PTFE-Folie ist peripheres Dichtungselement für den Fall einer Fremdspülung der Kolbenführungshülse (4). Ein weiterer gleicher Flachdichtungsring (9) zwischen Pumpenkopfbüchse (6) und Fixierringschraube (10) ist vorgesehen, um als Ausgleichselement zu wirken, das für eine gleichmäßige Flächenverteilung der Belastung sorgt, die einerseits durch ein gewisses sehr gering zu haltendes Verspannen der Pumpenkopfeinsatzteile bei der Montage in der Aufnahmebohrung zueinander auftritt, und andererseits wegen der Anpreßkräfte, die von der Pumpenkopfbüchse (6) stirnseitig infolge der hydraulischen Beaufschlagung während des Förderbetriebs bei hohen Arbeitsdrücken aufzunehmen sind.

Der Jochkörper (2) des Pumpenkopfes (1) wird zusätzlich zu den beschriebenen Längsschlitzen (13) von, ebenfalls voll durchgehenden und von der Seite her geführten doppelt-T-förmigen vertikalen Aussparungen (14) durchdrungen, die die besagten Längsschlitze im vordersten Bereich Kreuzen. Der Schnittbereich von Längs-und Querschlitzung ist so dimensioniert, daß die Kolbenführungshülse (4), die aufgrund der an ihr befindlichen Spülschlauch-Anschlußsegmente wegen der im Mündungsbereich der Aufnahmebohrung vorhandenen, den Jochkörper (2) hier schließenden Seitenstege nicht von vorne her einzubauen ist, an dieser Stelle von der Seite her eingesetzt werden kann.

Die vertikalen Durchbrüche (14) im Jochkörper (2) des Pumpenkopfes (1) dienen sowohl als Sichtöffnungen als auch als Aufnahmeschlitze für die von der Seite her zu montierenden, modulartig aufgebauten Ventileinheiten (11, 12), wobei zum Erreichen peripherer Abdichtung deren Vorspannen gegenüber der Pumpenkopfbüchse (6) mit Hilfe von Innensechskant-Stiftschrauben (19), die in Gewindelöchern in den Deckstegen ober-bzw. unterhalb der Vertikalschlize (14) eingeschraubt sind, erfolgt.

Im Gegensatz zu der Version der Pumpenkopfbüchse (6), die für andere (erfindungsgemäße) Ausführungsformen der jochförmigen Pumpenkopfeinheit zur Anwendung kommt, weist die Variante dieses Bauteils, die für die hier beschriebene Auslegengsform vorgesehen ist, kein die äußere Mündung der Ein-und Auslaßbohrungen zu den Ventilen umlaufendes, randförmiges stützprofil auf. Ein derartiges Stützprofil, dem die Aufgabe zukommt, einem Verformen der Ventildichtringe aus gefülltem PTFE (die spezielle Werkstoffauswahl gehorcht den besonderen Einsatzbedingungen) infolge von Kaltfließen, das unter dem Einfluß der Vorspannung auftritt, denen die beteiligten Teile zum Erreichen einer peripheren Dichtung unterliegen, entgegenzuwirken, kann im vorliegenden entfallen, weil als entsprechende Dichtungselemente nur mehr extrem dünne Flachdichtungen (20) aus PTFE-(FEP)-Folie verwandt werden. Zur Aufnahme dieser Art von Ventildichtungen ist die Pumpenkopfbüchse (6) modifiziert und weist einfache plane Anschliffe (8) an den Ventilstichbohrungen auf. Diese, von oben her gesehen, quadratischen Anschliffe entsprechen formmäßig den zugehörigen Flachdichtungen. Ein geringes Übermaß in der Kantenlänge der Flachdichtungen sorgt beim Einsetzen in die Anschliffe (8) an der Pumpenkopfbüchse (6) für ein Haftenbleiben.

Der Einsatz der besagten Art der Ventildichtungen vermeidet nicht nur das Problem einer Verformung infolge Kaltfließens, sondern vermindert gleichzeitig den den Pumpwirkungsgrad negativ beeinflussenden "schädlichen Raum" im Verdrängersystem, der sich als Totvolumen in Bereich Dichtkante des Eingangsventils zu Dichtkante des Auslaßventils definiert.

Die nach Modulkonzept aufgebauten Ventileinheiten (11, 12) sind dadurch gekennzeichnet, daß

...

(a) alle vom Fördermedium berührten Teile entweder aus Saphir und Keramik oder aus chemisch inerten Sonderwerkstoffen auf Kunststoffbasis gefertigt sind. Gleichfalls ist keinerlei kontakt mit metallischen Oberflächen an den Übergangsstellen zwischen den Ventileinheiten und den zugehörigen Schlauch-und Rohrleitungen gegeben.

Dem zugrunde liegenden Auslegungsprinzip nach, wird dies mit Hilfe einer Buchse (21, 22) aus chemisch inertem Kunststoff erreicht, der in einer zentralen Bohrung der Ventilmodulgehäuse (23, 24) eingepreßt ist und alle förderstrombrührten Stellen abdeckt.

(b) die Vorteile einer "fittinglosen Ventileinheit" mit denen einer mehrfach-kompatiblen, nach Bedarf auch metallfrei zu gestaltenden, Fittingverbindung kombiniert sind, wobei dem Begriff "fittinglose Ventileinheit" insbesondere Vedrehungsschutz beim Festschrauben sowie Demontier-und Zerlegbarkeit ohne vorheriges Abtrennen von Verbindungsleitungen, bezeichnet werden soll.

Dies wird dadurch erreicht, daß sich die Ventilmodule auch mit angeschlossenen Verbindungleitungen von der Seite her in die entsprechenden Aufnahmeschlitze (14) im Pumpenkopfjoch einsetzen lassen. Zusätzlich kommt es infolge des Vorspannens zum Erreichen einer peripheren Abdichtung am Verdrängersystem mit tels der dafür vorgesehenen Druckschrauben zu keinem Übertragen von Drehkräften auf die Ventilmodule (11, 12), weil Module und Aufnahmeschlitze kongruent rechteckiges Profil haben. Weiterhin wird ein genaues Fluchten von Ventilmodul (11, 12) und Pumpenkpfbüchse (6) dadurch gewährleistet, daß der Zapfen der Druckschraube (19) in eine entsprechende zylindrische Ansenkung auf der Rückseite des Ventilmodulkörpers (23, 24) eingreift.

Die an den Ventilmodulen vorgesehenen trennbaren Rohr-oder Schlauchverbindungen beruhen auf einem Konzept der Mehrfachkompatibilität auf der Basis einer speziellen Fittingschraube (25). Die Bohrung dieser Schraube ist abgangseitig zum Erreichen einer Einspannung der Enden von (PTFE)-Anschlußschläuchen leicht konisch angesenkt. Bei variiertem Bohrungsdurchmesser und in Kombination mit passend dimensionierten Kunststoffhülsen (26) von T-förmigen Profil können unter Verwendung von einfachen oder ummantelten PTFE-Kapillarschlauch Hoch-oder Niederdruckverbindungen mit unterschiedlicher Durchlaßweite hergestellt werden. Gleichzeitig lassen sich übliche Kapillarrohre aus rostfreiem Stahl anschließen. Hierzu wird ein spezieller Schneidring (27) eingesetzt, der entgegen gewohnter Vorgehensweise mit seiner Kegelbasis zum Rohrende hin ausgerichtet wird.

(c) in Sonderausführung eine Ablaß-und Entlüfungsvorrichtung (15) in das Ventilmodul (11, 12) integriert ist, deren zentrales Funktionselement eine, mittels Rändelschraube (29) zu betätigende Schließspindel (28) bildet, die durch eine Kunststoffhülse (31) geführt und durch eine Tellerfederanordnung (30) vorgespannt wird. Die Schließspindel (28) ist an ihrer, durch den Förderstrom berührten Spitze mit einer Rubinkugel (34) versehen, die in tangentialem Kontakt auf die zugeordnete Stichbohrung in der Kunststoffbuchse (21) des Ventilmodulkörpers (23) drückt. Die zentrale Ablaßbohrung (35) verzweigt sich hinter der darin frontseitig eingebördelten Schließkugel (34) in einer radialen Kreuzbohrung (33) nach außen. Auf diese Weise wird ein Durchgang zu dem die Kugel umgebenden Sammelraum geschaffen, der seinerseits mit einem federgestützten Ring (32) mit PTFE-Hülle nach außen hin gedichtet ist. Auch im Förderstombereich des Ablaß-und Entlüftungsventils kommt die gepumpte Flüssigkeit mit keiner metallischen Oberfläche in Berührung.

Bei einlaßseitigem Einsatz der in beschriebener Art modifizierten Ventilmodule (15), kann bei Inbetriebnahme der Fördereinrichtung durch Ansaugen mit Hilfe einer Spritze das Zuleitungssystem vom Vorratsbehälter her mit Flüssigkeit gefüllt werden. Die auslaßseitige Bestückungskonfiguration erlaubt demgegenüber zusätzlich ein Entlüften des gesamten Verdrängerraumbereichs.

(d) spezielle Kugelventilpatronen (36, 37) vorgesehen sind die in Aufnahmebohrungen (38) mit randseitig geschlitztem Bund an den Ventilmodulkörpern (23, 24) eingesetzt sind. Die interne Abdichtung der Kugelventilpatronen (36, 37) geschieht durch Pressung gegen die Oberfläche der Kunststoffbuchse (21, 22) am Grund der Aufnahmebohrung. Falls erforderlich, kann zusätzlich ein Flachdichtungsring (39) aus PTFE-Film zwischengelegt werden.

Bei den besagten Ventilpatronen sind die zugehörigen Innenteile, Sitz (40), Kugel (41) und die (andernorts beschriebene) Kugelführung (42) mit angearbeitetem Kugelstopp, in eine einfache und zum Zweck eines Erreichens von Hochdruckbeständigkeit, dickwandige Hülse als Gehäuse (43) angeordnet. Dieses Gehäuse (43) kann aus Saphir, und in diesem Fall zur Durchsichtigkeit innen und außen poliert, oder falls Durchsichtigkeit nicht gefördert ist, aus Zirkonoxidkeramik gefertigt sein.

Da Ventilsitz (41) und Keramik-Kugelführungs/Kugelstopp-Element (42) in der zugehörigen Gehäusehülse (43) frei verschieblich eingesetzt sind, weisen sie an den Mantelflächen je einen kleinen Anschliff auf, der im Einbauzustand zu einem schmalen Spalt zur Gehäuseinnenwandung hin führt. Die Ventileinsatzteile (40, 41, 42) lassen sich nun dadurch fixieren, daß ein zum Einfädeln an einem Ende gerecktes Stück Mikrokapillar-PTFE-Schlauch in diesen Spalt (45) klemmend eingezogen und nachfolgend bündig zugeschnitten wird. Hilfsweise genügt auch ein Anfeuchten der Teile, um ein Herausrutschen aus der Gehäusehülse zu verhindern.

**Ansprüche**

Feindosierpumpe für Flüssigkeiten, insbesondere zur Anwendung in der HPLC-Technik, mit einem Pumpenkopfgehäuse, mit mindestens einer darin angeordneten, einen Verdrängerraum sowie Zu-und Ableitungskanäle enthaltenden Pumpenkopfbüchse aus durchsichtigem Material, mit einem Tauchkolben für jeden Verdrängerraum, und mit im dem Pumpenkopfgehäuse angeordneten patronenartigen Ventileinheiten aus durchsichtigem Material, von denen jede mit ihrem einen Ende an dem Mündungsbereich des (eines) Zuleitungskanales bzw. Ableitungskanals an der (den) Pumpenkopfbüchse(n) und mit ihrem anderen Ende an einem Anschlußrohradapter anliegt, welcher einen abgewinkelten Leitungskanal enthält, der an seinem einen Ende mit der Ventileinheit und an seinem anderen Ende mit einem Anschlußrohr für die zu fördernde Flüssigkeit verbunden ist, wobei auf den Anschlußrohradapter ein Dichtungsdruck ausgeübt wird, mittels welchem eine dichte Verbindung der Ventileinheit mit der Pumpenkopfbüchse einerseits und dem Anschlußrohradapter andererseits gewährleistet ist, und wobei das Pumpenkopfgehäuse mit Ausnehmungen versehen ist, durch welche die Pumpenkopfbüchse und die Ventileinheiten von außen sichtbar sind,
dadurch gekennzeichnet,
daß zumindest der die Ausnehmungen enthaltende Teil des Pumpenkopfgehäuses (1) einstückig ausgebildet und die Ausnehmungen (14) zum Sichtbarmachen der Ventileinheiten (36, 37) so gestaltet und angeordnet sind, daß die Ventileinheiten (36, 37) und die Anschlußrohradapter (11, 12) über diese Ausnehmungen (14) montierbar oder auswechselbar sind.

FIG.1A

FIG.1B

FIG. 2A

FIG. 2B

FIG. 2C

FIG. 2D

FIG. 2E

0 270 130

35

30
31
32
33
34

28

29

23

21 26

25

FIG.3A

15

37

36

FIG.3B

0 270 130